# EUROPEAN PATENT APPLICATION

(11) **EP 3 089 373 A1**
(43) Date of publication of application: **02.11.2016**
(21) Application number: 15189776.6
(22) Date of filing: 14.10.2015
(51) Int. Cl.: H04B 5/00, H02J 50/10, H02J 5/00, H02J 7/02

(54) **FLEXIBLE AND RETRACTABLE WIRELESS CHARGING DEVICE**

(30) Priority: 30.04.2015 TW 104113889; 02.06.2015 TW 104117864
(71) Applicant: JTOUCH Corporation, Taoyuan County 32063 (TW)
(72) Inventor: Yeh, Yu-Chou, 32063 Jhongli City, Taoyuan County (TW); Yeh, Tsung-Her, 32063 Jhongli City, Taoyuan County (TW); Wu, Chen-Chi, 32063 Jhongli City, Taoyuan County (TW); Yeh, Chun-Ting, 32063 Jhongli City, Taoyuan County (TW); Huang, Hsueh-Jung, 32063 Jhongli City, Taoyuan County (TW); Cheng, Bo-Ruei, 32063 Jhongli City, Taoyuan County (TW); Hu, Chih-Ming, 32063 Jhongli City, Taoyuan County (TW); Tsui, Chiu-Cheng, 32063 Jhongli City, Taoyuan County (TW)
(74) Representative: 2K Patentanwälte Blasberg Kewitz & Reichel

(57) **Abstract**

A wireless charging device (3) includes a first separation part (33), a second separation part (34), a flexible charging film (30) and a circuit board (35). The first separation part (33) has a first accommodation space (333). The second separation part (34) has a second accommodation space (343). The flexible charging film (30) is retractable back to the first accommodation space (333) of the first separation part (33). The circuit board (35) is electrically connected with the flexible charging film (30), and disposed within the second accommodation space (343) of the second separation part (34). When the second separation part (34) is moved in a direction away from the first separation part (33), the flexible charging film (30) is stretched so as to wirelessly charge at least one power-receiving device (4, 4'). When the second separation part (34) is moved in a direction toward the first separation part (33), the flexible charging film (30) is retracted back to the first accommodation space (333) of the first separation part (33).

## Description

### FIELD OF THE INVENTION

The present invention relates to a wireless charging device, and more particularly to a flexible and retractable wireless charging device.

### BACKGROUND OF THE INVENTION

Nowadays, various portable electronic devices such as mobile phones or tablet computers are widely used in our daily lives. For providing electric energy to the portable electronic device, a charging device is used to charge a built-in battery of the portable electronic device. Generally, the charging devices are classified into wired charging devices and wireless charging devices. Since the wireless charging device can be operated in various environments and not restricted by the power cable, the wired charging device is gradually replaced by the wireless charging device.

The wireless charging operation is also referred as an inductive charging operation or a non-contact charging operation. By the wireless charging technology, electric energy is transmitted from a power-providing device to a power-receiving device in a wireless transmission manner. Generally, three wireless power charging groups include WPC (Wireless Power Consortium) (QI), PMA (Power Matters Alliance) and A4WP (Alliance for Wireless Power). The WPC and A4WP standards are the mainstreams of the wireless charging technologies. The wireless charging technologies comprise a magnetic induction technology (low frequency) and a magnetic resonance technology (high frequency). The magnetic induction technology is only applied to short-distance energy transmission. The power conversion efficiency of the magnetic induction technology is higher. However, since the power-receiving device should be aligned with and attached on the power-providing device according to the magnetic induction technology, the power-providing device cannot charge plural power-receiving devices simultaneously. By the magnetic resonance technology, the energy transmission between a transmitter terminal and a receiver terminal is implemented at a specified resonant frequency. Consequently, the magnetic resonance technology can be applied to the longer-distance energy transmission when compared with the magnetic induction technology.

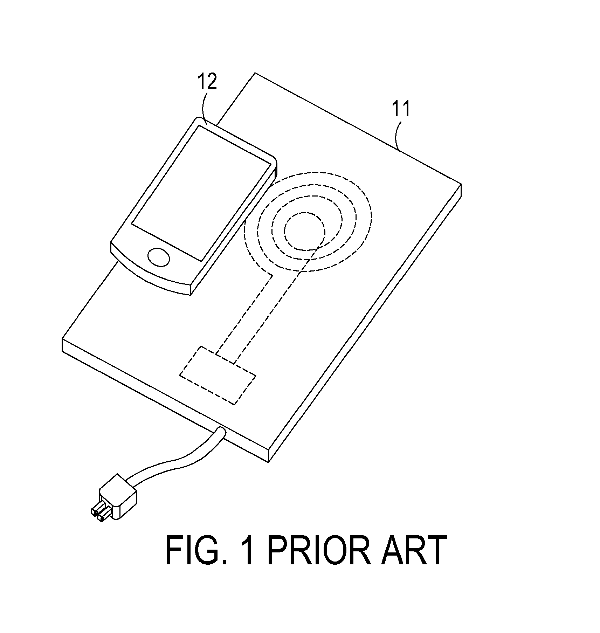

FIG. 1 schematically illustrates the use of a wireless charging device to wirelessly charge a power-receiving device. As shown in FIG. 1, the wireless charging device 11 transmits electric energy to the power-receiving device 12 in a wireless transmission manner. Generally, a coil assembly of the wireless charging device 11 is made of a multi-core copper wire. Moreover, after the copper wire is mounted on a rigid substrate which is made of ferrite magnetic oxide, the coil assembly is produced. The coil assembly is installed within a casing. In other words, the wireless charging device cannot be stretched or deformed according to the practical requirements and the operating environments, and only a side of the wireless charging device is capable of charging the power-receiving device. Consequently, the applications of the wireless charging device are restricted. Moreover, it is difficult to store and carry the wireless charging device. Especially when the wireless charging device is used for wirelessly charging a larger-surface power-receiving device, the volume and weight of the wireless charging device are increased. Under this circumstance, it is difficult to carry the wireless charging device.

Moreover, the current wireless charging devices are operated by different technologies. Consequently, the coupling frequencies of the coil assemblies and the transmitter terminal circuits are usually different. Under this circumstance, the components of the wireless charging devices and the components of the power-receiving devices are incompatible. Due to the incompatibility, the coil assemblies and the circuitry components of different wireless charging devices are usually different. Consequently, the wireless charging device is customized according to the type of the portable electronic device. Under this circumstance, the applications of the wireless charging device are restricted. Moreover, the wireless charging device is unable to wirelessly charge plural power-receiving devices which are designed according to different wireless charging technologies.

### SUMMARY OF THE INVENTION

An object of the present invention provides a flexible and retractable wireless charging device with a flexible charging film. The flexible and retractable wireless charging device can be easily retracted, stored and carried. Consequently, the wireless charging application and convenience are enhanced, and the layout space is saved.

Another object of the present invention provides a flexible and retractable wireless charging device with a charging film. Even if the charging film is frequently retracted, the conductive wire between the thin-film transmitter coil assembly and the circuit board is not broken. Consequently, the use life of the wireless charging device is extended.

A further object of the present invention provides a flexible and retractable wireless charging device capable of emitting an electromagnetic wave with one or more frequencies so as to wirelessly charge one or plural power-receiving devices at the same time or at different times. Moreover, the wireless charging device can adaptively or selectively charge the at least one power-receiving device according to magnetic resonance or magnetic induction.

In accordance with an aspect of the present invention, there is provided a wireless charging device. The wireless charging device includes a first separation part, a second separation part, a flexible charging film and a circuit board. The first separation part has a first accommodation space. The second separation part has a second accommodation space. The flexible charging film includes a first lateral end and a second lateral end. The first lateral end is connected with the first separation part. The second lateral end is connected with the second separation part. The flexible charging film is retractable back to the first accommodation space of the first separation part. The circuit board is electrically connected with the flexible charging film, and disposed within the second accommodation space of the second separation part. When the second separation part is moved in a direction away from the first separation part, the flexible charging film is stretched, so that at least one power-receiving device is placed on the flexible charging film to be wirelessly charged. When the second separation part is moved in a direction toward the first separation part, the flexible charging film is retracted back to the first accommodation space of the first separation part.

The above contents of the present invention will become more readily apparent to those ordinarily skilled in the art after reviewing the following detailed description and accompanying drawings, in which:

### BRIEF DESCRIPTION OF THE DRAWINGS

FIG. 1 schematically illustrates the use of a wireless charging device to wirelessly charge a power-receiving device;
FIG. 2A schematically illustrates the architecture of a wireless charging system according to an embodiment of the present invention;
FIG. 2B schematically illustrates a variant example of the architecture of the wireless charging system of FIG. 2A;
FIG. 3A is a schematic perspective view illustrating a flexible and retractable wireless charging device of the wireless charging system in a stored state;
FIG. 3B is a schematic perspective view illustrating the flexible and retractable wireless charging device of the wireless charging system in a usage state;
FIG. 4 is a schematic exploded view illustrating the flexible and retractable wireless charging device according to an embodiment of the present invention;
FIG. 5A is a schematic exploded view illustrating a thin-film transmitter coil assembly of the wireless charging device of FIG. 3;
FIG. 5B is a schematic exploded view illustrating a variant example of the thin-film transmitter coil assembly of FIG. 5A;
FIG. 5C is a schematic exploded view illustrating another variant example of the thin-film transmitter coil assembly of FIG. 5A;
FIG. 6 schematically illustrates an example of the shielding structure of the wireless charging device as shown in FIG. 5B;
FIG. 7 is a schematic circuit block diagram illustrating a transmitter module of the wireless charging device of FIG. 2;
FIG. 8 is a schematic circuit block diagram illustrating a receiver module of the power-receiving device of FIG. 2;
FIG. 9 is a schematic perspective view illustrating the appearance of a power-receiving device of the wireless charging system according to the embodiment of the present invention; and
FIG. 10 is a schematic circuit block diagram illustrating the architecture of the wireless charging system according to another embodiment of the present invention.

### DETAILED DESCRIPTION OF THE PREFERRED EMBODIMENT

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

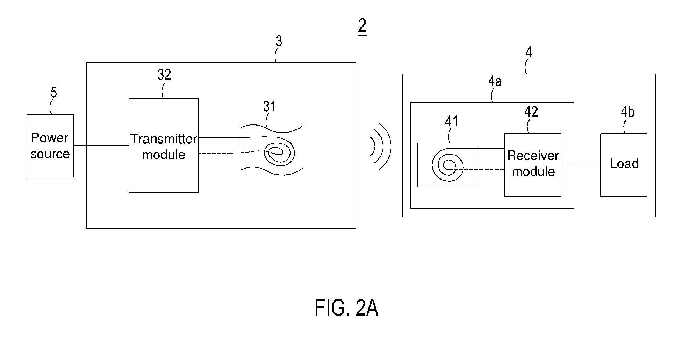

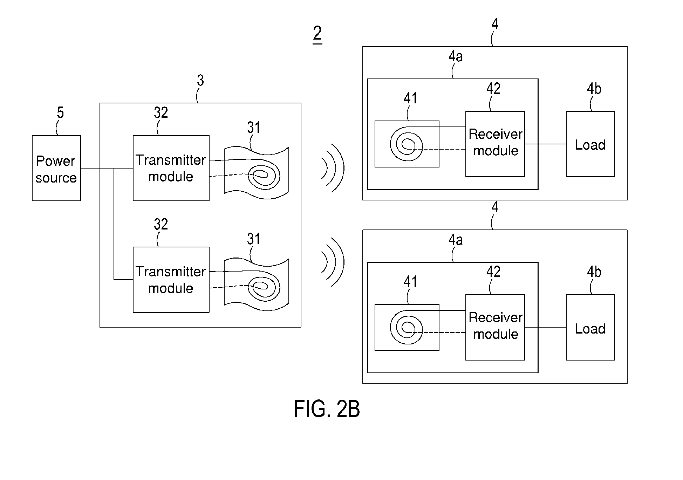

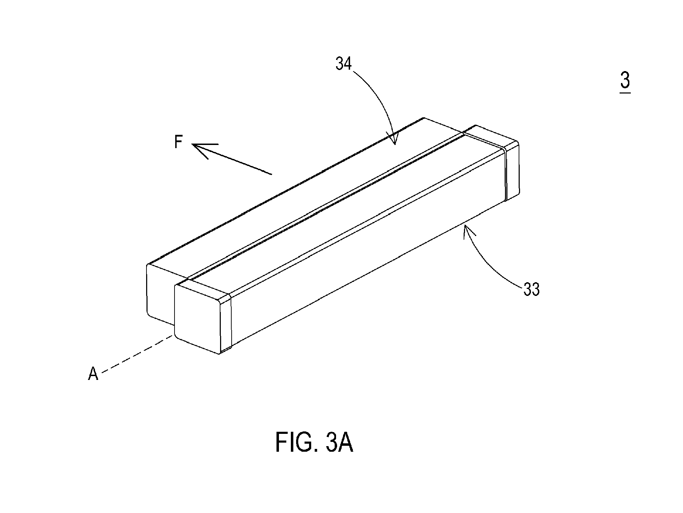

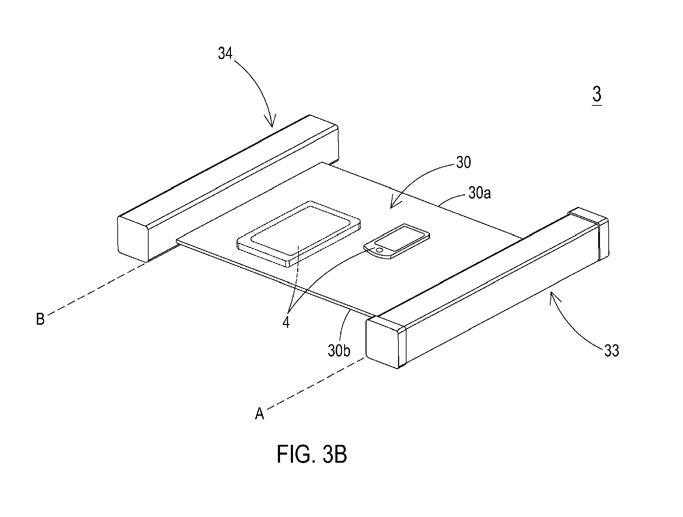

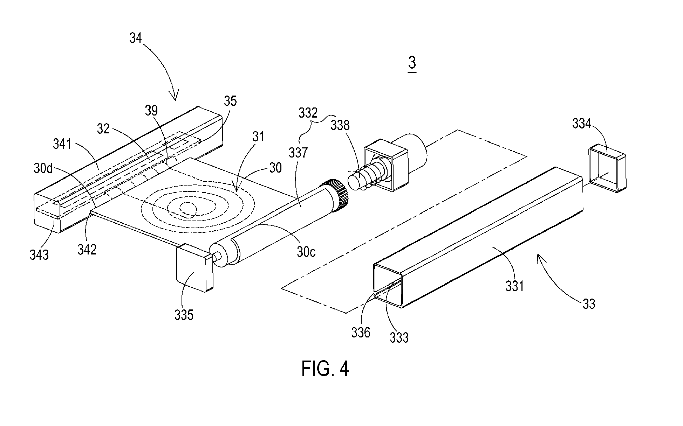

FIG. 2A schematically illustrates the architecture of a wireless charging system according to an embodiment of the present invention. FIG. 2B schematically illustrates a variant example of the architecture of the wireless charging system of FIG. 2A. FIG. 3A is a schematic perspective view illustrating a flexible and retractable wireless charging device of the wireless charging system in a stored state. FIG. 3B is a schematic perspective view illustrating the flexible and retractable wireless charging device of the wireless charging system in a usage state. FIG. 4 is a schematic exploded view illustrating the flexible and retractable wireless charging device according to an embodiment of the present invention.

Please refer to FIGS. 2A, 2B, 3A, 3B and 4. The wireless charging system 2 comprise a flexible and retractable wireless charging device 3 (also referred as a wireless charging device) and at least one power-receiving device 4. The wireless charging device 3 is connected with a power source 5. For example, the power source 5 is an AC utility power source, an external battery or a built-in battery. The wireless charging device 3 emits an electromagnetic wave with a specified frequency (i.e., a single frequency) or a wideband frequency (e.g., plural frequencies). For example, the frequency of the electromagnetic wave is in the range between 60Hz and 300GHz. Consequently, by a magnetic induction technology (low frequency) or a magnetic resonance technology (high frequency), the wireless charging device 3 can wirelessly charge one or more power-receiving devices 4 through the electromagnetic wave with identical or different frequencies. For example, the power-receiving device 4 is a mobile phone, a tablet computer or an electrical product.

Please refer to FIGS. 3A, 3B and 4. The wireless charging device 3 comprises a flexible charging film 30, a first separation part 33, a second separation part 34 and a circuit board 35. The flexible charging film 30 comprises at least one thin-film transmitter coil assembly 31. Moreover, the flexible charging film 30 has a first surface 30a, a second surface 30b, a first lateral end 30c and a second lateral end 30d. The first surface 30a and the second surface 30b are opposed to each other. The first lateral end 30c and the second lateral end 30d are located at two opposite ends of the flexible charging film 30. Moreover, the first lateral end 30c is connected with the first separation part 33, and the second lateral end 30d is connected with the second separation part 34. The flexible charging film 30 is retractable back to the space within the first separation part 33. The flexible charging film 30 and the circuit board 35 are electrically connected with each other through a conductive wire 39. The circuit board 35 and the conductive wire 39 are disposed within the second separation part 34. For using the wireless charging device 3, the second separation part 34 is moved in a direction F away from the first separation part 33 (i.e., from the position Ato the position B) in response to an external force of the user. Consequently, the flexible charging film 30 is stretched and expanded. Under this circumstance, the wireless charging device 3 is in a usage state. After the at least one power-receiving device 4 is placed on the first surface 30a or the second surface 30b, the at least one power-receiving device 4 can be wirelessly charged by the wireless charging device 3. On the other hand, if the wireless charging device 3 is no longer used, the second separation part 34 is moved in a direction toward the first separation part 33 (i.e., from the position B to the position A). Consequently, the flexible charging film 30 is retracted back to the space within the first separation part 33. Under this circumstance, the wireless charging device 3 is in a stored state, and the wireless charging device 3 can be stored and carried easily.

Please refer to FIG. 3A, 3B and 4 again. The first separation part 33 of the wireless charging device 3 comprises a first casing 331 and a winding mechanism 332. In this embodiment, the first casing 331 is a rectangular hollow box. It is noted that the shape of the first casing 331 is not restricted. Moreover, the first casing 331 comprises a first accommodation space 333. The winding mechanism 332 is disposed within the first accommodation space 333. The first casing 331 comprises lateral covers 334 and 335 at two opposite ends thereof. The two opposite ends of the first casing 331 are capped by the lateral covers 334 and 335. Moreover, the first casing 331 further comprises an opening 336. The flexible charging film 30 is allowed to penetrate through the opening 336.

In this embodiment, the winding mechanism 332 comprises a rotating shaft 337 and an adjusting mechanism 338. The rotating shaft 337 and the adjusting mechanism 338 are disposed within the first accommodation space 333 of the first casing 331, and connected with each other. The first lateral end 30c of the flexible charging film 30 is penetrated through the opening 336 of the first casing 331 and connected with the rotating shaft 337. The flexible charging film 30 can be wound around the rotating shaft 337. The adjusting mechanism 338 is used for adjusting a turn number and a positioning angle of the rotating shaft 337. Preferably but not exclusively, the adjusting mechanism 338 is a torsion adjusting mechanism. When the second separation part 34 is moved away from the first separation part 33 in response to the external force of the user, the flexible charging film 30 is released from the opening 336 of the first separation part 33 along the moving direction of the second separation part 34. Consequently, the rotating shaft 337 is correspondingly rotated in a specified direction (e.g., a clockwise direction). When the external force is no longer applied, the rotating shaft 337 is not rotated and the rotating shaft 337 is positioned at a specified angle through the interaction between the adjusting mechanism 338 and the rotating shaft 337. Under this circumstance, a torsional moment is stored between the adjusting mechanism 338 and the rotating shaft 337. Consequently, in response to a pulling force of the user, the flexible charging film 30 around the rotating shaft 337 can be stretched and the stretched length of the flexible charging film 30 can be adjusted according to the practical requirements. For storing the flexible charging film 30, the second separation part 34 is slightly moved in the direction away from the first separation part 33 in response to a small pulling force. Consequently, the rotation of the rotating shaft 337 is no longer limited by the adjusting mechanism 338. Meanwhile, the torsional moment stored between the adjusting mechanism 338 and the rotating shaft 337 is released. Consequently, the rotating shaft 337 is rotated in a reverse direction (e.g., a counterclockwise direction), and the flexible charging film 30 is automatically wound around the rotating shaft 337 within the first separation part 33 until the first separation part 33 and the second separation part 34 are contacted with each other. In an embodiment, the adjusting mechanism 338 comprises a spring, a reed and a gear. It is noted that the structure of the adjusting mechanism 338 may be modified according to the practical requirements.

The second separation part 34 comprises a second casing 341. The second casing 341 comprises an elongated slot 342 and a second accommodation space 343. The second lateral end 30d of the flexible charging film 30 is connected with the elongated slot 342 of the second casing 341. The circuit board 35 comprises at least one transmitter module 32. The transmitter module 32 of the circuit board 35 is electrically connected with the thin-film transmitter coil assembly 31 of the flexible charging film 30 through the conductive wire 39. In this embodiment, the conductive wire 39 is a power wire or a flexible flat cable. The circuit board 35 is fixed within the second accommodation space 343 of the second casing 341. Consequently, the circuit board 35 and the conductive wire 39 are protected by the second casing 341. Moreover, even if the flexible charging film 30 is frequently retracted, the possibility of breaking the conductive wire 39 will be minimized.

In the embodiment as shown in FIG. 2A, the wireless charging device 3 comprises one thin-film transmitter coil assembly 31 and one transmitter module 32. Consequently, the wireless charging device 3 emits the electromagnetic wave with a specified frequency in order to wirelessly charge the power-receiving device 4. The thin-film transmitter coil assembly 31 is disposed within the flexible charging film 30, and the transmitter module 32 is disposed on the circuit board 35 (see FIG. 4). In the embodiment as shown in FIG. 2B, the wireless charging device 3 comprises plural thin-film transmitter coil assemblies 31 and plural transmitter modules 32. The thin-film transmitter coil assemblies 31 are electrically connected with the corresponding transmitter modules 32. Consequently, the wireless charging device 3 emits the electromagnetic wave with the specified frequency or the plural frequencies in order to wirelessly charge one or plural power-receiving devices 4 at the same time or at different times.

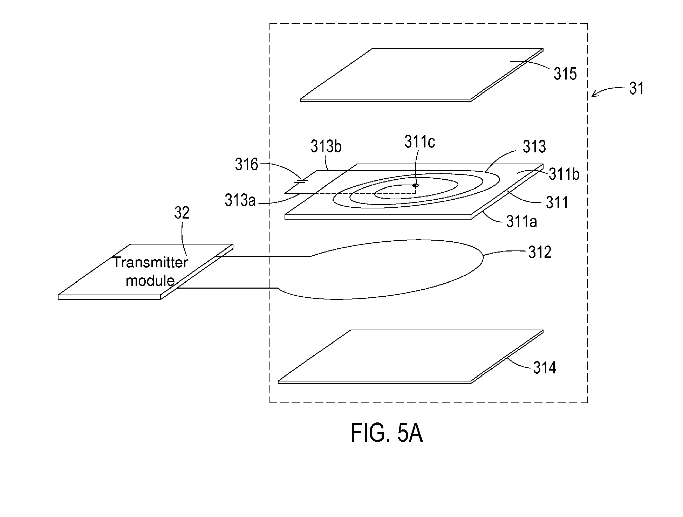

FIG. 5A is a schematic exploded view illustrating a thin-film transmitter coil assembly of the wireless charging device of FIG. 3. Please refer to FIGS. 4 and 5A. In this embodiment, the thin-film transmitter coil assembly 31 of the flexible charging film 30 comprises a flexible substrate 311, an oscillation starting antenna 312, a resonant antenna 313, a first protective layer 314 and a second protective layer 315. The oscillation starting antenna 312 and the resonant antenna 313 are disposed on two opposite surfaces of the flexible substrate 311. In particular, the oscillation starting antenna 312 is disposed on a first surface 311a of the flexible substrate 311, and the resonant antenna 313 is disposed on a second surface 311b of the flexible substrate 311. Moreover, one or more capacitors 316 are connected between a first end 313a and a second end 313b of the resonant antenna 313. The both ends of the oscillation starting antenna 312 are connected with the transmitter module 32 on the circuit board 35. In this embodiment, a greater portion of the resonant antenna 313 is disposed on the second surface 311b of the flexible substrate 311, and the first end 313a of the resonant antenna 313 is penetrated through a perforation 311c of the flexible substrate 311 and projected out through the first surface 311a. The oscillation starting antenna 312 and the resonant antenna 313 are covered by the first protective layer 314 and the second protective layer 315, respectively. That is, the first protective layer 314 and the second protective layer 315 are located at the outer sides of the oscillation starting antenna 312 and the resonant antenna 313, respectively. When an AC signal from the transmitter module 32 is received by the oscillation starting antenna 312 of the thin-film transmitter coil assembly 31, a coupling effect of the oscillation starting antenna 312 and the resonant antenna 313 occurs. Consequently, the electromagnetic wave with the specified frequency and a thin-film receiver coil assembly 41 of a wireless receiving unit 4a of the corresponding power-receiving device 4 (see FIGS. 2A and 2B) result in a coupling effect. In response to the coupling effect, the electric energy from the wireless charging device 3 is received by the thin-film receiver coil assembly 41 according to magnetic resonance or magnetic induction. The received electric energy is further converted into an output voltage by a receiver module 42. The output voltage is transmitted to a load 4b so as to wireless charge the power-receiving device 4. In some embodiments, the oscillation starting antenna 312 and the resonant antenna 313 are single-loop antennas or multi-loop antennas. Moreover, the oscillation starting antenna 312 and the resonant antenna 313 have circular shapes, elliptic shapes or rectangular shapes.

In some embodiments, a first adhesive layer and a second adhesive layer (not shown) are disposed on the first surface 311a and the second surface 311b of the flexible substrate 311, respectively. The oscillation starting antenna 312 and the resonant antenna 313 are made of electrically-conductive material. Moreover, the oscillation starting antenna 312 and the resonant antenna 313 are respectively fixed on the first surface 311a and the second surface 311b of the flexible substrate 311 through the corresponding adhesive layers. Each of the first adhesive layer and the second adhesive layer is made of light curable adhesive material, thermally curable adhesive material or any other appropriate curable adhesive material (e.g., vinyl acetate-ethylene copolymer gel, polyimide gel, rubbery gel, polyolefin gel or moisture curable polyurethane gel). In some other embodiments, the adhesive layer contains curable adhesive material and magnetic material. Preferably but not exclusively, the magnetic material is ferromagnetic powder. Alternatively, in some other embodiments, the flexible substrate 311 is replaced by the adhesive layers.

Preferably but not exclusively, the flexible substrate 311 is made of polyethylene terephthalate (PET), thin glass, polyethylennaphthalat (PEN), polyethersulfone (PES), polymethylmethacrylate (PMMA), polyimide (PI) or polycarbonate (PC). In some embodiments, the oscillation starting antenna 312 and the resonant antenna 313 are single-loop antennas or multi-loop antennas. Moreover, the oscillation starting antenna 312 and the resonant antenna 313 have circular shapes, elliptic shapes or rectangular shapes. The electrically-conductive material of the oscillation starting antenna 312 and the resonant antenna 313 includes but is not limited to silver (Ag), copper (Cu), gold (Au), aluminum (Al), tin (Sn) or graphene. Moreover, each of the first protective layer 314 and the second protective layer 315 is made of protective paint. An example of the protective paint includes but is not limited to epoxy resin, acrylic silicone, polyurethane rubber, vinyl acetate-ethylene copolymer gel, polyimide gel, rubbery gel, polyolefin gel moisture curable polyurethane gel or silicone.

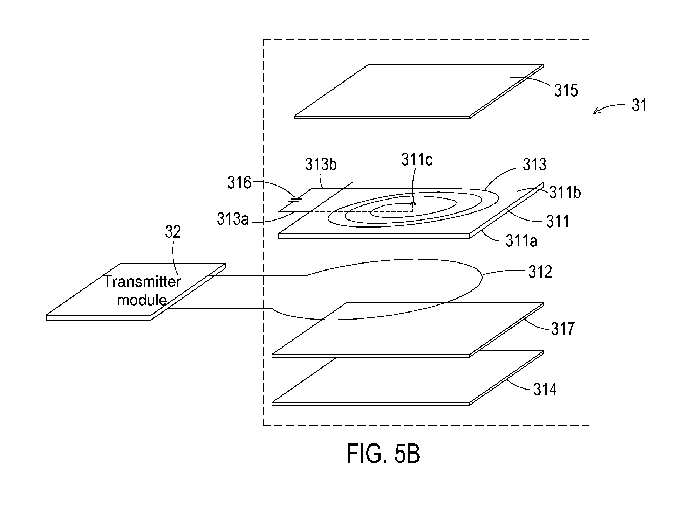

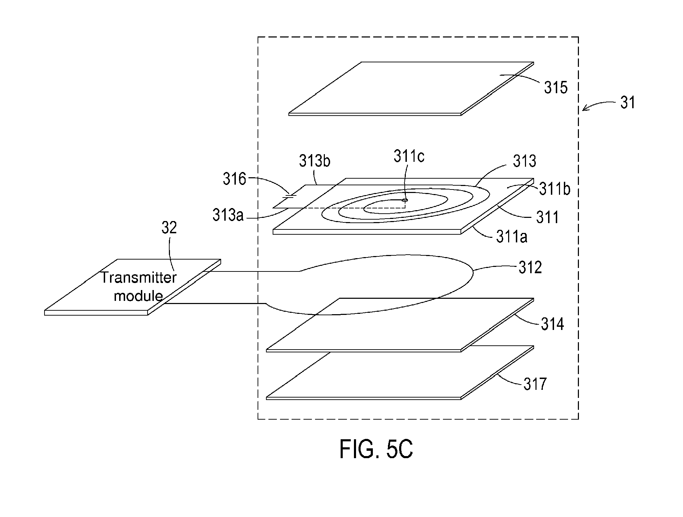

FIG. 5B is a schematic exploded view illustrating a variant example of the thin-film transmitter coil assembly of FIG. 5A. As shown in FIG. 5B, when only one side of the of the thin-film transmitter coil assembly 31 is provided for charging the power-receiving device 4, the thin-film transmitter coil assembly 31 further comprises a shielding structure 317. The shielding structure 317 is arranged between the oscillation starting antenna 312 and the first protective layer 314. The shielding structure 317 is used for blocking divergence of the electromagnetic wave toward the outer side of the first protective layer 314. Consequently, the efficacy of the electromagnetic wave is enhanced. FIG. 5C is a schematic exploded view illustrating another variant example of the thin-film transmitter coil assembly of FIG. 5A. As shown in FIG. 5C, the shielding structure 317 is located at an outer side of the first protective layer 314. Similarly, the shielding structure 317 is used for blocking divergence of the electromagnetic wave toward the outside of the thin-film transmitter coil assembly 31. Consequently, the efficacy of the electromagnetic wave is enhanced.

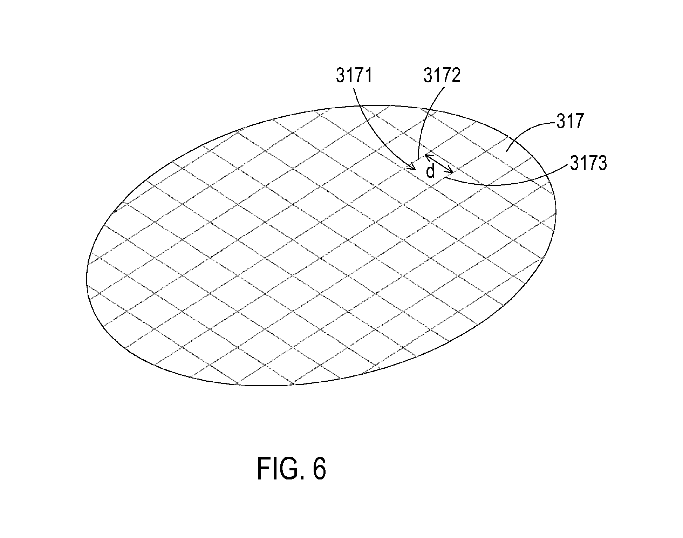

FIG. 6 schematically illustrates an example of the shielding structure of the wireless charging device as shown in FIG. 5B. In the embodiment as shown in FIG. 6, the shielding structure 317 is a metal mesh for blocking the divergence of the electromagnetic wave with a higher frequency (e.g., with the frequency higher than 6 MHz) toward the outside of the thin-film transmitter coil assembly 31. The metal mesh is made of metallic material or metallic composite material selected from copper, gold, silver, aluminum, tungsten, chromium, titanium, indium, tin, nickel, iron, or a combination thereof. The pattern of the metal mesh comprises plural mesh units 3171. Every two adjacent metal lines 3172 and 3173 of the mesh unit 3171 that are not crisscrossed with each other are separated by a distance d. The distance d is shorter than a wavelength of the electromagnetic wave from the thin-film transmitter coil assembly 31. In some other embodiments, the shielding structure 317 is a magnetically-permeable film for blocking the divergence of the electromagnetic wave with a lower frequency (e.g., in the range between 60Hz and 20MHz) toward the outer side of the first protective layer 314. The magnetically-permeable film is made of a mixture of ferrite, zinc-nickel ferrite, zinc-manganese ferrite or iron-silicon-aluminum alloy and adhesive material. In another embodiment, the shielding structure 317 is a composite film for blocking the divergence of the electromagnetic wave with the wideband frequency toward the outer side of the first protective layer 314 and enhancing the efficacy of the electromagnetic wave. For example, the composite film is a combination of a metal mesh and a magnetically-permeable film.

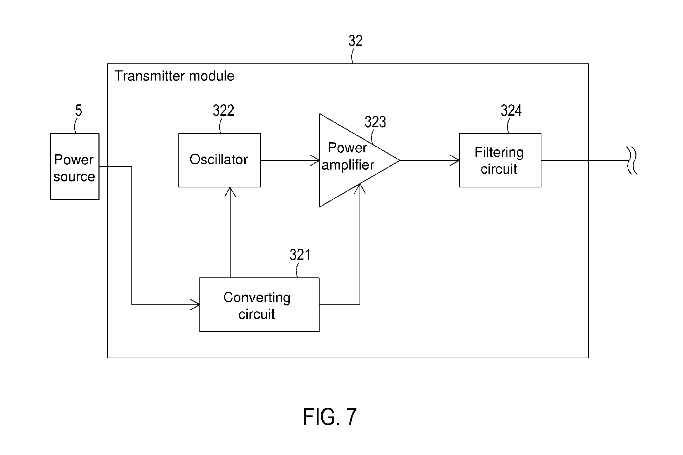

FIG. 7 is a schematic circuit block diagram illustrating a transmitter module of the wireless charging device of FIG. 2. In an embodiment, the transmitter module 32 comprises a converting circuit 321, an oscillator 322, a power amplifier 323 and a filtering circuit 324. The input end of the converting circuit 321 is electrically connected with the power source 5. The output end of the converting circuit 321 is electrically connected with the oscillator 322 and the power amplifier 323. The converting circuit 321 is used for converting the electric energy from the power source 5 and providing the regulated voltage to the oscillator 322 and the power amplifier 323. For example, the converting circuit 321 comprises a DC-to-DC converter, an AC-to-AC converter and/or a DC-to-AC convertor. The oscillator 322 is used for adjustably outputting an AC signal with a specified frequency. The AC signal with the specified frequency is amplified by the power amplifier 323. The resonant wave and the undesired frequency of the AC signal are filtered by the filtering circuit 324. The filtered AC signal is transmitted to the oscillation starting antenna 312 of the thin-film transmitter coil assembly 31.

Please refer to FIGS. 2A and 2B again. In this embodiment, each power-receiving device 4 comprises the wireless receiving unit 4a and the load 4b. The wireless receiving unit 4a and the load 4b are separate components or integrated into a single component. For example, the wireless receiving unit 4a is a wireless receiver pad, and the load 4b is a mobile phone without the function of being wirelessly charged. However, after the wireless receiver pad and the mobile phone are electrically connected with each other, the mobile phone can be wireless charged. Alternatively, in another embodiment, the wireless receiving unit 4a is disposed within a casing of the load 4b (e.g., the mobile phone).

Please refer to FIGS. 2A and 2B again. The wireless receiving unit 4a of each power-receiving device 4 comprises the thin-film receiver coil assembly 41 and the receiver module 42. Like the thin-film transmitter coil assembly 31, the thin-film receiver coil assembly 41 comprises a flexible substrate, an oscillation starting antenna, a resonant antenna, a first protective layer and a second protective layer. Moreover, one or more capacitors are connected between two ends of the resonant antenna. The structures, materials and functions of the flexible substrate, the oscillation starting antenna, the resonant antenna, the first protective layer and the second protective layer of the thin-film receiver coil assembly 41 are similar to those of the flexible substrate, the oscillation starting antenna, the resonant antenna, the first protective layer and the second protective layer of the thin-film transmitter coil assembly 31 as shown in FIG. 5A, and are not redundantly described herein. Due to the coupling effect between the thin-film receiver coil assembly 41 and the thin-film transmitter coil assembly 31, the electric energy from the thin-film transmitter coil assembly 31 of the wireless charging device 3 can be received by the thin-film receiver coil assembly 41 according to magnetic resonance or magnetic induction. Consequently, when the power-receiving device 4 is disposed on the first surface 30a or the second surface 30b of the flexible charging film 30, if a higher frequency (e.g., 6.78MHz) of the electromagnetic wave emitted by the thin-film transmitter coil assembly 31 of the wireless charging device 3 and the frequency of the thin-film receiver coil assembly 41 of the power-receiving device 4 are identical, the electric energy can be transmitted from the thin-film transmitter coil assembly 31 of the wireless charging device 3 to the thin-film receiver coil assembly 41 of the wireless receiving unit 4a according to magnetic resonance. Alternatively, when the power-receiving device 4 is disposed on the first surface 30a or the second surface 30b of the flexible charging film 30, if a lower frequency (e.g., 100KHz) of the electromagnetic wave emitted by the thin-film transmitter coil assembly 31 of the wireless charging device 3 and the frequency of the thin-film receiver coil assembly 41 of the power-receiving device 4 are identical, the electric energy can be transmitted from the thin-film transmitter coil assembly 31 of the wireless charging device 3 to the thin-film receiver coil assembly 41 of the wireless receiving unit 4a according to magnetic induction.

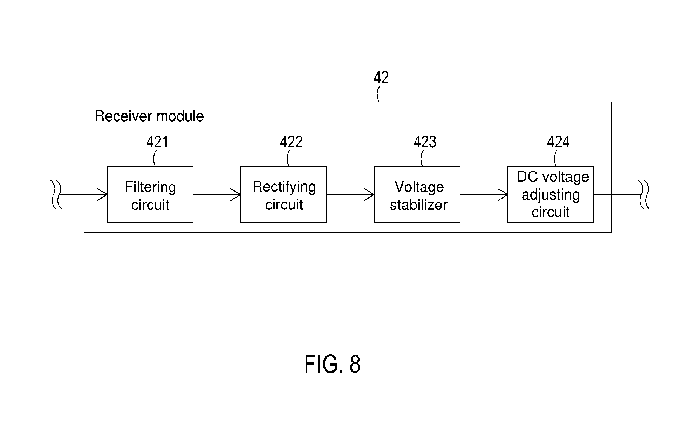

FIG. 8 is a schematic circuit block diagram illustrating a receiver module of the power-receiving device of FIG. 2. Please refer to FIGS. 2A, 2B and 8. The wireless receiving unit 4a comprises at least one receiver module 42. Each receiver module 42 comprises a filtering circuit 421, a rectifying circuit 422, a voltage stabilizer 423 and a DC voltage adjusting circuit 424. The filtering circuit 421 is electrically connected with the resonant antenna of the thin-film receiver coil assembly 41. The resonant wave of the AC signal from the thin-film receiver coil assembly 41 is filtered by the filtering circuit 421. The rectifying circuit 422 is electrically connected with the filtering circuit 421 and the voltage stabilizer 423 for converting the AC signal into a rectified DC voltage. The voltage stabilizer 423 is electrically connected with the rectifying circuit 422 and the DC voltage adjusting circuit 424 for stabilizing the rectified DC voltage to a stabilized DC voltage with a rated voltage value. The DC voltage adjusting circuit 424 is electrically connected with the voltage stabilizer 423 and the load 4b for adjusting (e.g., increasing) the stabilized DC voltage to a regulated DC voltage. The regulated DC voltage is provided to the load 4b to charge the load 4b (e.g., the battery of the mobile phone).

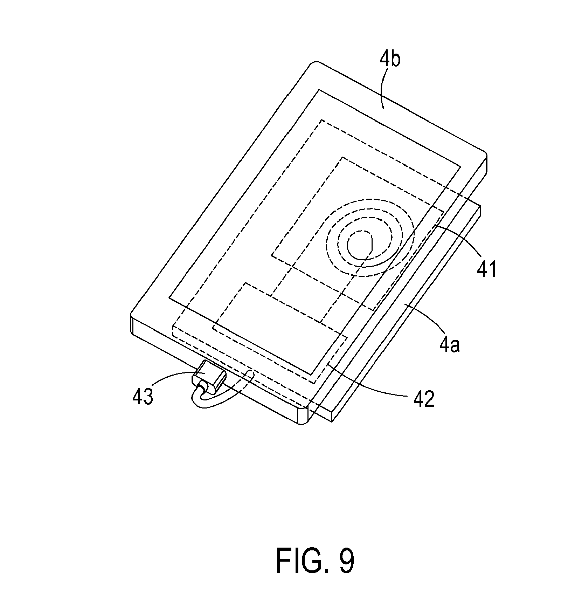

FIG. 9 is a schematic perspective view illustrating the appearance of a power-receiving device of the wireless charging system according to the embodiment of the present invention. Please refer to FIGS. 2A, 2B and 9. The power-receiving device 4 comprises the wireless receiving unit 4a and the load 4b. In this embodiment, the wireless receiving unit 4a of the power-receiving device 4 is a wireless receiver pad, and the load 4b is a mobile phone without the function of being wirelessly charged. When a connector 43 of the wireless receiving unit 4a (i.e., the wireless receiver pad) is electrically connected with a corresponding connector of the load 4b (i.e., the mobile phone), the electric energy from the thin-film transmitter coil assembly 31 of the wireless charging device 3 can be received by the thin-film receiver coil assembly 41 and the receiver module 42 of the wireless receiving unit 4a. Under this circumstance, even if the mobile phone does not have the function of being wirelessly charged, the mobile phone can be wirelessly charged by the wireless charging device 3 through the wireless receiving unit 4a.

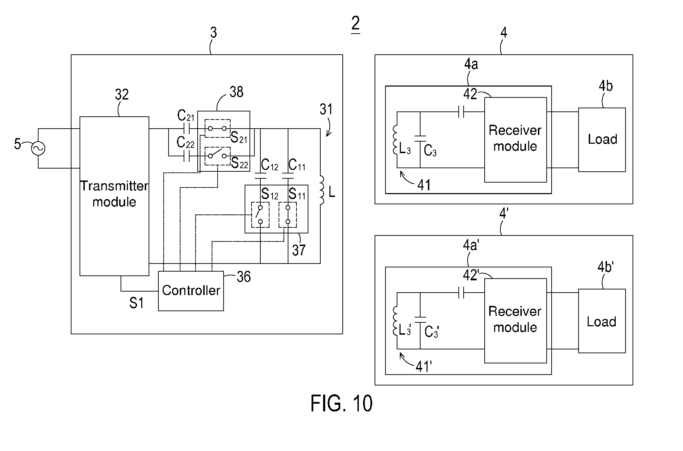

FIG. 10 is a schematic circuit block diagram illustrating the architecture of the wireless charging system according to another embodiment of the present invention. In this embodiment, the wireless charging system 2 comprise a wireless charging device 3 and two power-receiving devices 4 and 4'. The power-receiving device 4 comprises a wireless receiving unit 4a, and the power-receiving device 4' comprises a wireless receiving unit 4a'. According to the specifications and features of the wireless receiving units 4a and 4a', the wireless charging device 3 can adaptively or selectively charge the load 4b and 4b' of the power-receiving devices 4 and 4' by means of magnetic resonance or magnetic induction. In this embodiment, the wireless charging device 3 comprises the flexible charging film 30, the first separation part 33, the second separation part 34 and the circuit board 35. The flexible charging film 30 comprises the thin-film transmitter coil assembly 31. The circuit board 35 comprises the transmitter module 32, a controller 36, a first switching circuit 37, a second switching circuit 38, two first capacitors C11, C12 and two second capacitors C21, C22. The structures, functions and principles of the thin-film transmitter coil assembly 31 and the transmitter module 32 are similar to those mentioned above, and are not redundantly described herein. The structures, functions and principles of the receiver coil assemblies 41, 41' and the receiver modules 42, 42' are similar to those mentioned above, and are not redundantly described herein. The first capacitors C11 and C12 are connected with the oscillation starting antenna (not shown) of the thin-film transmitter coil assembly 31 in parallel. Moreover, the first capacitors C11 and C12 are connected with each other in parallel so as to be inductively coupled with the receiver coil assemblies 41 and 41' of the power-receiving devices 4 and 4'. The second capacitors C21 and C22 are connected with the output terminal of the transmitter module 32 and the oscillation starting antenna (not shown) of the thin-film transmitter coil assembly 31 in series. Moreover, the second capacitors C21 and C22 are connected with each other in parallel so as to be inductively coupled with the transmitter module 32.

Consequently, the second capacitors C21 and C22 can filter the signal and increase the charging performance. The first switching circuit 37 comprises two first switching elements S11 and S12. The first switching elements S11 and S12 are connected with the corresponding first capacitors C11 and C12 in series, respectively. The second switching circuit 38 comprises two second switching elements S21 and S22. The second switching elements S21 and S22 are connected with the corresponding second capacitors C21 and C22 in series, respectively. The controller 36 is electrically connected with the first switching elements S11 and S12 of the first switching circuit 37 and the second switching elements S21 and S22 of the second switching circuit 38.

According to a sensing signal from the wireless receiving units 4a and 4a' of the power-receiving devices 4 and 4' based on the adapted wireless charging technology, the controller 36 generates a control signal. According to the control signal, the first switching elements S11 and S12 of the first switching circuit 37 and the second switching elements S21 and S22 of the second switching circuit 38 are selectively turned on or turned off. Consequently, the wireless charging device 3 can adaptively or selectively charge the load 4b and 4b' of the power-receiving devices 4 and 4' by means of magnetic resonance or magnetic induction according to the specifications and features of the wireless receiving units 4a and 4a'.

The working frequencies of the wireless charging device 3 and the power-receiving devices 4 and 4' can be calculated according to the formula: fa = 1/[(2π)×(LaCa)^{1/2}] = 1/[(2π)×(LbCb)^{1/2}] = fb. In this formula, fa is the working frequency of the wireless charging device 3, fb is the working frequency of the power-receiving device 4 or 4', Ca is the capacitance value of the first capacitor C11 or C12, La is the inductance value of the oscillation starting antenna of the thin-film transmitter coil assembly 31, Cb is the capacitance value of the third capacitor C3 or C3' of the power-receiving device 4 or 4', and Lb is the inductance value of the oscillation starting antenna of the thin-film receiver coil assembly 41 or 41'. For example, the capacitance values of the first capacitors C11 and C12 are respectively 0.5µF and 0.1nF, and the inductance value L of the oscillation starting antenna of the thin-film transmitter coil assembly 31 is 5µH. If the capacitance value of the third capacitor C3 of the power-receiving device 4 is 0.5µF and the inductance value L3 of the oscillation starting antenna of the thin-film receiver coil assembly 41 is 5µH, the controller 36 of the wireless charging device 3 issues a corresponding control signal to the first switching circuit 37 and the second switching circuit 38. According to this control signal, the first switching element S11 and the second switching element S21 are turned on, and the first switching element S12 and the second switching element S22 are turned off. Consequently, the first capacitor C11 with the capacitance value of 0.5µF is selected by the wireless charging device 3 and the inductance value of the oscillation starting antenna of the thin-film transmitter coil assembly 31 is 5µH. Under this circumstance, the working frequency of the wireless charging device 3 and the working frequency of the wireless receiving unit 4a of the power-receiving device 4 are both 100 KHz. Consequently, the wireless receiving unit 4a of the power-receiving device 4 is wirelessly charged by the wireless charging device 3 at the lower frequency according to magnetic induction. Whereas, if the capacitance value of the third capacitor C3' of the power-receiving device 4' is 0.1nF and the inductance value L3' of the oscillation starting antenna of the thin-film receiver coil assembly 41' is 5µH, the controller 36 of the wireless charging device 3 issues a corresponding control signal to the first switching circuit 37 and the second switching circuit 38. According to this control signal, the first switching element S12 and the second switching element S22 are turned on, and the first switching element S11 and the second switching element S21 are turned off. Consequently, the first capacitor C12 with the capacitance value of 0.1nF is selected by the wireless charging device 3 and the inductance value of the oscillation starting antenna of the thin-film transmitter coil assembly 31 is 5µH. Under this circumstance, the working frequency of the wireless charging device 3 and the working frequency of the wireless receiving unit 4a' of the power-receiving device 4' are both 6.78MHz. Consequently, the wireless receiving unit 4a' of the power-receiving device 4' is wirelessly charged by the wireless charging device 3 at the higher frequency according to magnetic resonance. The working frequency is presented herein for purpose of illustration and description only.

From the above descriptions, the present invention provides a flexible and retractable wireless charging device with a charging film. The charging film is flexible and slim. Since the charging film can be retracted, stored and carried, the convenience of using the charging film is enhanced and the layout space is saved. Moreover, even if the charging film is frequently retracted, the conductive wire between the thin-film transmitter coil assembly and the circuit board is not broken. Consequently, the use life of the wireless charging device is extended. Moreover, the wireless charging device of the present invention can emit an electromagnetic wave with at least one frequency so as to wirelessly charge at least one power-receiving device at the same time or at different times. Moreover, the wireless charging device can adaptively or selectively charge the at least one power-receiving device according to magnetic resonance or magnetic induction.

## Claims

1. A wireless charging device (3), comprising:
a first separation part (33) having a first accommodation space (333);
a second separation part (34) having a second accommodation space (343);
a flexible charging film (30) comprising a first lateral end (30c) and a second lateral end (30d), wherein the first lateral end (30c) is connected with the first separation part (33), the second lateral end (30d) is connected with the second separation part (34), and the flexible charging film (30) is retractable back to the first accommodation space (333) of the first separation part (33); and
a circuit board (35) electrically connected with the flexible charging film (30), and disposed within the second accommodation space (343) of the second separation part (34),
wherein when the second separation part (34) is moved in a direction away from the first separation part (33), the flexible charging film (30) is stretched, so that at least one power-receiving device (4, 4') is placed on the flexible charging film (30) to be wirelessly charged, wherein when the second separation part (34) is moved in a direction toward the first separation part (33), the flexible charging film (30) is retracted back to the first accommodation space (333) of the first separation part (33).

2. The wireless charging device (3) according to claim 1, wherein the flexible charging film (30) and the circuit board (35) are electrically connected with each other through a conductive wire (39), wherein the conductive wire (39) is disposed within the second accommodation space (343) of the second separation part (34).

3. The wireless charging device (3) according to claim 1 or 2, wherein the first separation part (33) comprises:
a first casing (331) comprising the first accommodation space (333) and an opening (336), wherein the flexible charging film (30) is allowed to be penetrated through the opening (336); and
a winding mechanism (332) disposed within the first accommodation space (333), and comprising a rotating shaft (337), wherein the first lateral end (30c) of the flexible charging film (30) is connected with the rotating shaft (337), and the flexible charging film (30) is wound around the rotating shaft (337).

4. The wireless charging device (3) according to any of the claims 1 to 3, wherein the winding mechanism (332) further comprises an adjusting mechanism (338), wherein the adjusting mechanism (338) is connected with the rotating shaft (337) for adjusting a turn number and a positioning angle of the rotating shaft (337).

5. The wireless charging device (3) according to claim 4, wherein the adjusting mechanism (338) is a torsion adjusting mechanism, and the adjusting mechanism (338) provides a torsional moment to the rotating shaft (337), wherein when the torsional moment is released, the flexible charging film (30) is automatically wound around the rotating shaft (337).

6. The wireless charging device (3) according to any of the claims 1 to 5, wherein the second separation part (34) comprises a second casing (341), and the second casing (341) comprises the second accommodation space (343) and an elongated slot (342), wherein the second lateral end (30d) of the flexible charging film (30) is connected with the elongated slot (342) of the second casing (341).

7. The wireless charging device (3) according to any of the claims 1 to 6, wherein the flexible charging film (30) comprises at least one thin-film transmitter coil assembly (31), and the circuit board (35) comprises at least one transmitter module (32), wherein the at least one thin-film transmitter coil assembly (31) is electrically connected with the corresponding transmitter module (32) for receiving an AC signal from the corresponding transmitter module (32), wherein the at least one thin-film transmitter coil assembly (31) emits an electromagnetic wave with at least one specified frequency for wirelessly charging at least one power-receiving device (4, 4').

8. The wireless charging device (3) according to any of the claims 1 to 7, wherein each thin-film transmitter coil assembly (31) comprises:
a flexible substrate (311) having a first surface (311a) and a second surface (311b), wherein the first surface (311a) and the second surface (311b) are opposed to each other;
an oscillation starting antenna (312) disposed on the first surface (311a) of the flexible substrate (311);
a resonant antenna (313) disposed on the second surface (311b) of the flexible substrate (311), wherein at least one capacitor (316) is connected between a first end (313a) and a second end (313b) of each resonant antenna (313), wherein the electromagnetic wave with the specified frequency is emitted in response to a coupling effect of the resonant antenna (313) and the oscillation starting antenna (312);
a first protective layer (314) for covering the oscillation starting antenna (312); and
a second protective layer (315) for covering the resonant antenna (313).

9. The wireless charging device (3) according to any of the claims 1 to 8, wherein the thin-film transmitter coil assembly (31) further comprises a shielding structure (317), wherein the shielding structure (317) is arranged between the oscillation starting antenna (312) and the first protective layer (314), or the shielding structure (317) is located at an outer side of the first protective layer (314), wherein the shielding structure (317) comprises a metal mesh, a magnetically-permeable film, or a combination of the metal mesh and the magnetically-permeable film.

10. The wireless charging device (3) according to any of the claims 1 to 9, wherein each transmitter module (32) comprises:
a converting circuit (321) electrically connected with a power source (5) for converting an electric energy from the power source (5);
an oscillator (322) electrically connected with the converting circuit (321) for adjustably outputting the AC signal with the specified frequency;
a power amplifier (323) connected with the oscillator (322) and the converting circuit (321) for amplifying the AC signal; and
a filtering circuit (324) connected with the power amplifier (323) for filtering the AC signal and outputting the filtered AC signal to the corresponding transmitter coil assembly (31).

11. The wireless charging device (3) according to any of the claims 1 to 10, wherein the wireless charging device (3) further comprises a controller (36), wherein the power-receiving device (4, 4') is wirelessly charged by the wireless charging device (3) under control of the controller (36) according to magnetic resonance or magnetic induction.

12. The wireless charging device (3) according to any of the claims 1 to 11, wherein the flexible charging film (30) further comprises a first surface (30a) and a second surface (30b), wherein after the at least one power-receiving device (4, 4') is placed on the first surface (30a) or the second surface (30b) of the flexible charging film (30), the at least one power-receiving device (4, 4') is wirelessly charged by the wireless charging device (3).
